# EUROPEAN PATENT APPLICATION

(11) **EP 4 171 137 A1**
(43) Date of publication of application: **26.04.2023**
(21) Application number: 20940973.9
(22) Date of filing: 19.06.2020
(51) Int. Cl.: H04W 72/02, H04W 72/10, H04W 72/12

(54) **TERMINAL, WIRELESS COMMUNICATION METHOD, AND BASE STATION**

(71) Applicant: NTT DOCOMO, INC., Chiyoda-ku Tokyo 100-6150 (JP)
(72) Inventor: TAKAHASHI, Yuki, Tokyo 100-6150 (JP); NAGATA, Satoshi, Tokyo 100-6150 (JP)
(74) Representative: Hoffmann Eitle
(86) International application number: PCT/JP2020/024236
(87) International publication number: WO 2021/255938

(57) **Abstract**

A terminal according to an aspect of the present disclosure includes receiving downlink control information including information related to a resource for which an UL transmission is canceled, and performing control to first apply one of first UL transmission control and second UL transmission control and then apply the other when an HARQ-ACK for a semi-persistently transmitted downlink shared channel overlaps with another UL transmission in a time domain and the another UL transmission uses a resource for which the UL transmission is canceled, the first UL transmission control being based on priorities corresponding to the HARQ-ACK and the another UL transmission, respectively, the second UL transmission control being based on information related to the resource for which the UL transmission is canceled.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In a radio communication system (for example, 5G or NR) in the future, it is assumed that a plurality of services (also referred to as, for example, use cases or communication types) having different communication requirements coexist, the services including high-speed and large-capacity services (for example, enhanced Mobile Broadband (eMBB)), ultra-multiple-terminal services (for example, massive Machine Type Communication (mMTC), and Internet of Things (IoT)), and ultra-reliable and low-latency services (for example, Ultra Reliable and Low Latency Communications (URLLC)).

For example, in Rel. 16 or later versions, it has been discussed to configure priorities for signals/channels and control communication based on the priority configured for each signal/channel. For example, it is assumed that, when a plurality of signals/channels overlap, transmission/reception are controlled based on the priority of each signal/channel.

It is also assumed that cancellation (also referred to as, for example, preemption or interruption) is performed on a scheduled uplink (UL) transmission to satisfy communication requirements on delay reduction and/or reliability.

However, when a plurality of UL transmissions overlap, it has not been sufficiently discussed how to control UL transmission control based on cancellation information of an UL transmission. For example, when priorities are configured for the UL transmissions, it is an issue how to control UL transmission control based on the priorities and UL transmission control based on cancellation information of an UL transmission.

Thus, it is an objective of the present disclosure to provide a terminal, a radio communication method, and a base station that can appropriately perform an UL transmission even when cancel operation of the UL transmission is supported.

### Solution to Problem

A terminal according to an aspect of the present disclosure includes receiving downlink control information including information related to a resource for which an UL transmission is canceled, and performing control to first apply one of first UL transmission control and second UL transmission control and then apply the other when an HARQ-ACK for a semi-persistently transmitted downlink shared channel overlaps with another UL transmission in a time domain and the another UL transmission uses a resource for which the UL transmission is canceled, the first UL transmission control being based on priorities corresponding to the HARQ-ACK and the another UL transmission, respectively, the second UL transmission control being based on information related to the resource for which the UL transmission is canceled. Advantageous Effects of Invention

According to an aspect of the present disclosure, it is possible to appropriately perform an UL transmission even when cancel operation of the UL transmission is supported.

### Brief Description of Drawings

FIG. 1 is a diagram to show an example of UL transmission control based on priorities;
FIG. 2 is a diagram to show another example of the UL transmission control based on priorities;
FIG. 3 is a diagram to show an example of transmission control of an HARQ-ACK for an SPS PDSCH;
FIG. 4 is a diagram to show another example of the transmission control of an HARQ-ACK for an SPS PDSCH.
FIG. 5 is a diagram to show an example in which a PUSCH transmission is canceled by UL cancel indication;
FIG. 6 is a diagram to show an example of UL transmission control based on UL cancel indication;
FIG. 7 is a diagram to show an example of UL transmission control according to a first aspect;
FIG. 8 is a diagram to show another example of the UL transmission control according to the first aspect;
FIG. 9 is a diagram to show another example of the UL transmission control according to the first aspect;
FIG. 10 is a diagram to show another example of the UL transmission control according to the first aspect;
FIG. 11 is a diagram to show another example of the UL transmission control according to the first aspect;
FIG. 12 is a diagram to show another example of the UL transmission control according to the first aspect;
FIG. 13 is a diagram to show another example of the UL transmission control according to the first aspect;
FIG. 14 is a diagram to show an example of UL transmission control according to a second aspect;
FIG. 15 is a diagram to show another example of the UL transmission control according to the second aspect;
FIG. 16 is a diagram to show another example of the UL transmission control according to the second aspect;
FIG. 17 is a diagram to show another example of the UL transmission control according to the second aspect;
FIG. 18 is a diagram to show another example of the UL transmission control according to the second aspect;
FIG. 19 is a diagram to show an example of a schematic structure of a radio communication system according to one embodiment;
FIG. 20 is a diagram to show an example of a structure of a base station according to one embodiment;
FIG. 21 is a diagram to show an example of a structure of a user terminal according to one embodiment; and
FIG. 22 is a diagram to show an example of a hardware structure of the base station and the user terminal according to one embodiment.

### Description of Embodiments

### <Traffic Type>

In a radio communication system (for example, NR) in the future, traffic types (also referred to as services, service types, communication types, use cases, or the like) such as further advancement (for example, enhanced Mobile Broadband (eMBB)) of a mobile broadband, machine type communication (for example, massive Machine Type Communications (mMTC) that achieves multiple simultaneous connection, Internet of Things (IoT)), and reliable and low-latency communication (for example, Ultra-Reliable and Low-Latency Communications (URLLC)) are assumed. For example, lower delay and higher reliability than those of eMBB are requested in URLLC.

In a physical layer, a traffic type may be identified based on at least one of those listed below.
- Logical channels having different priorities
- Modulation and coding scheme (MCS) table (MCS index table)
- Channel quality indication (CQI) table
- DCI format
- (Radio network temporary identifier (RNTI: System Information-Radio Network Temporary Identifier)) used for scrambling (masking) cyclic redundancy check (CRC) bits included in (added to) the DCI (DCI format)
- RRC (Radio Resource Control) parameter
- Particular RNTI (for example, URLLC RNTI or MCS-C-RNTI)
- Search space
- Certain field (for example, newly added field or reused existing field) in DCI

Specifically, the traffic type of an HARQ-ACK for a PDSCH may be determined based on at least one of those listed below.
- MCS index table used for determination of at least one of the modulation order, the target code rate, and the transport block size (TBS) of the PDSCH (for example, whether MCS index table 3 is used)
- RNTI used for CRC scrambling of DCI used for scheduling of the PDSCH (for example, whether CRC scrambling is performed with C-RNTI or MCS-C-RNTI)

The traffic type of a SR may be determined based on a higher layer parameter used as an identifier (SR-ID) of the SR. The higher layer parameter may indicate whether the traffic type of the SR is eMBB or URLLC.

The traffic type of CSI may be determined based on configuration information (CSIreportSetting) related to a CSI report, a DCI type or DCI transmission parameter used as a trigger, or the like. The configuration information, the DCI type, and the like may indicate whether the traffic type of the CSI is eMBB or URLLC. The configuration information may be a higher layer parameter.

The traffic type of a PUSCH may be determined based on at least one of those listed below.
- MCS index table used for determination of at least one of the modulation order, target code rate, and TBS of the PUSCH (for example, whether MCS index table 3 is used)
- RNTI used for CRC scrambling of DCI used for scheduling of the PUSCH (for example, whether CRC scrambling is performed with C-RNTI or MCS-C-RNTI)

A traffic type may be associated with communication requirements (requirements and required conditions such as delay and error rate), data type (such as voice or data), and the like.

The difference between an URLLC requirement and an eMBB requirement may be such that the delay (latency) of URLLC is smaller than the delay of eMBB or may be such that the URLLC requirement includes a reliability requirement.

For example, requirements for user (U) plane delay of eMBB may include such a requirement that the U plane delay for downlink is 4 ms and the U plane delay for uplink is 4 ms. On the other hand, requirements for U plane delay of URLLC may include such a requirement that the U plane delay for downlink is 0.5 ms and the U plane delay for uplink is 0.5 ms. Requirements for reliability of URLLC may include such a requirement that the 32-byte error rate is 10⁻⁵ for the U plane delay of 1 ms.

Advancement of the reliability of unicast data traffic has been mainly discussed as enhanced Ultra Reliable and Low Latency Communications (eURLLC). Hereinafter, URLLC and eURLLC are simply referred to as URLLC when not distinguished from each other.

### <Priority Configuration>

In NR of Rel. 16 or later versions, it has been discussed that priorities at a plurality of levels (for example, two levels) are configured for a certain signal or channel. For example, it is assumed to perform communication control (for example, transmission control at collision) with individual priorities configured for signals or channels corresponding to different traffic types (also referred to as, for example, services, service types, communication types, or use cases). Accordingly, communication can be controlled with different priorities configured for the same signal or channel in accordance with a service type or the like.

A priority may be configured for at least one of a signal (for example, UCI such as an HARQ-ACK, or a reference signal), a channel (such as a PDSCH, a PUSCH, or a PUCCH), a reference signal (such as channel state information (CSI) or a sounding reference signal (SRS)), a scheduling request (SR), and an HARQ-ACK codebook. A priority may be configured for each of a PUCCH used for transmission of a SR, a PUCCH used for transmission of an HARQ-ACK, and a PUCCH used for transmission of CSI.

Priorities may be defined with a first priority (for example, high) and a second priority (for example, low) that is lower than the first priority. Alternatively, priorities of three or more kinds may be configured.

For example, priorities may be configured for a dynamically scheduled PDSCH HARQ-ACK, a semi-persistent PDSCH (SPS PDSCH) HARQ-ACK, and an SPS PDSCH release HARQ-ACK. Alternatively, priorities may be configured for HARQ-ACK codebooks corresponding to these HARQ-ACKs. Note that, when a priority is configured for a PDSCH, the priority of the PDSCH may be interpreted as the priority of an HARQ-ACK for the PDSCH.

Priorities may be configured for a dynamic grant-based PUSCH, a configured-grant-based PUSCH, and the like.

Information related to a priority may be notified from a base station to a UE by using at least one of higher layer signaling and DCI. For example, the priority of a scheduling request may be configured by a higher layer parameter (for example, schedulingRequestPriority). The priority of an HARQ-ACK for a PDSCH (for example, a dynamic PDSCH) scheduled by DCI may be notified by the DCI. The priority of an HARQ-ACK for an SPS PDSCH may be configured by a higher parameter (for example, HARQ-ACK-Codebook-indicator-forSPS) or may be notified by DCI that indicates activation of the SPS PDSCH. A certain priority (for example, low) may be configured for P-CSI/SP-CSI transmitted by a PUCCH. On the other hand, a priority may be notified by DCI (for example, trigger DCI or activation DCI) for A-CSI/SP-CSI transmitted by a PUSCH.

The priority of a dynamic grant-based PUSCH may be notified by DCI that schedules the PUSCH. The priority of a configured-grant-based PUSCH may be configured by a higher layer parameter (for example, priority). A certain priority (for example, low) may be configured for A-SRS triggered by P-SRS/SP-SRS, DCI (for example, DCI format 0_1/DCI format 2_3).

### (UL Transmission Overlapping)

When a plurality of UL signals/UL channels overlap (or collide), the UE may control UL transmissions based on priorities.

Overlapping of a plurality of UL signals/UL channels may be overlapping of time resources (or time resources and frequency resources) of the plurality of UL signals/UL channels or overlapping of transmission timings of the plurality of UL signals/UL channels. A time resource may be interpreted as a time domain. A time resource may be in the unit of a symbol, a slot, a subslot, or a subframe.

Overlapping of a plurality of UL signals/UL channels at the same UE (for example, intra-UE) may mean overlapping of the plurality of UL signals/UL channels at least in the same time resource (for example, symbol). UL signal/UL channel collision between different UEs (for example, inter-UE) may mean overlapping of a plurality of UL signals/UL channels in the same time resource (for example, symbol) and the same frequency resource (for example, RB).

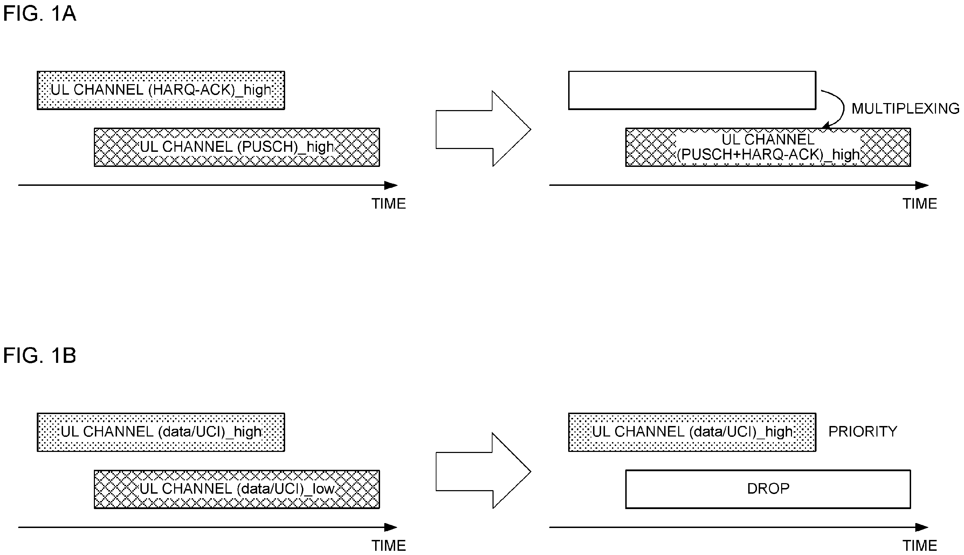

For example, when a plurality of UL signals/UL channels having the same priority overlap, a UE performs control to multiplex and transmit the plurality of UL signals/UL channels in one UL channel (refer to FIG. 1A).

FIG. 1A shows overlapping of an HARQ-ACK (or PUCCH for HARQ-ACK transmission) configured with the first priority (high) and UL data/UL-SCH (or PUSCH for UL data/UL-SCH transmission) configured with the first priority (high). In this case, the UE multiplexes (or maps) the HARQ-ACK to the PUSCH and transmits both the UL data and the HARQ-ACK.

When a plurality of UL signals/UL channels having different priorities overlap, the UE may perform control to perform UL transmissions having high priorities (for example, prioritizes UL transmissions having high priorities) and not to perform (for example, to drop) UL transmissions having low priorities (refer to FIG. 1B).

FIG. 1B shows a case of overlapping of UL data/HARQ-ACK (or UL channel for UL data/HARQ-ACK transmission) configured with the first priority (high) and UL data/HARQ-ACK (or UL channel for UL data/HARQ-ACK transmission) configured with the second priority (low). In this case, the UE performs control to drop UL data/HARQ-ACK having low priorities and prioritize UL data/HARQ-ACK having high priorities for transmission. Note that, the UE may change (for example, postpone or shift) transmission timings of UL transmissions having low priorities.

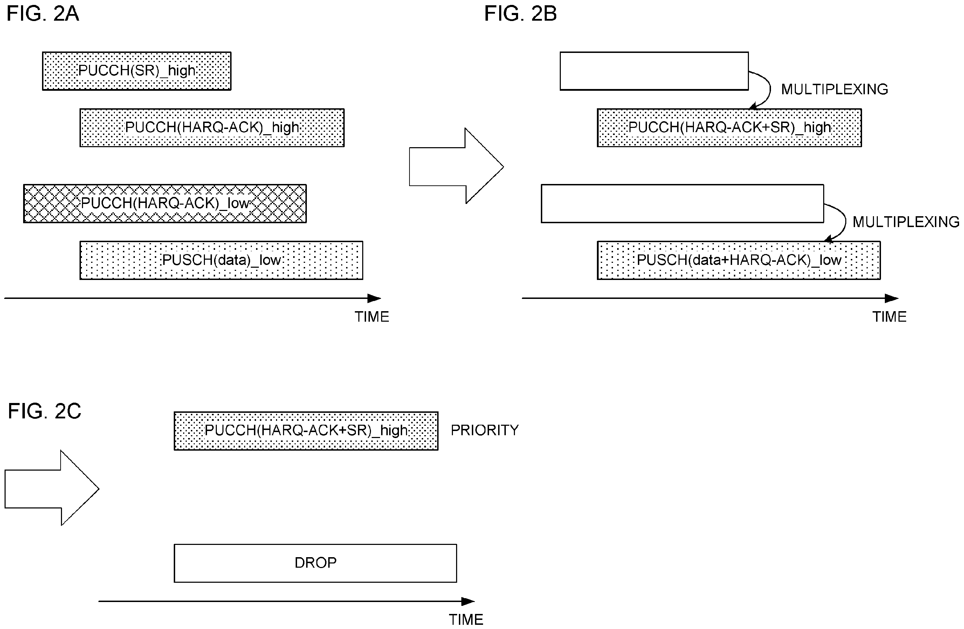

When two or more (or three or more) UL signals/UL channels overlap in the time domain (refer to FIG. 2A), transmissions may be controlled by two steps. At the first step, UL transmissions having the same priority are multiplexed to one UL channel (refer to FIG. 2B). At the second step, control may be performed to prioritize and transmit UL transmissions having high priorities and drop UL transmissions having low priorities among UL transmissions having different priorities (refer to FIG. 2C).

### (Semi-Persistent Scheduling)

In NR, semi-persistent scheduling (SPS) configured by higher layer signaling (for example, RRC) is supported. SPS may be configured for each serving cell, for each BWP, or for each carrier. For example, activation/deactivation of DL SPS may be separately controlled among cells, among BWPs, or among carriers.

DL SPS may be applied to a PDSCH. In this case, activation/deactivation of the PDSCH may be indicated by a PDCCH (or DCI). Deactivation may be interpreted as release. When DL SPS activation is indicated by a PDCCH, the UE may control reception operation of a semi-persistent PDSCH for which transmission/allocation is controlled by using a certain transmission condition. Reception operation may be interpreted as PDCCH (or DCI) monitoring, decoding processing, or demodulation processing.

A transmission condition/transmission parameter applied to a semi-persistent PDSCH may be configured by at least one of a PDCCH and higher layer signaling. The transmission condition may include, for example, a certain RNTI applied to a PDSCH or at least one of a PDCCH (or DCI/DCI format) that schedules the PDSCH, the number of SPS HARQ processes, and periodicity.

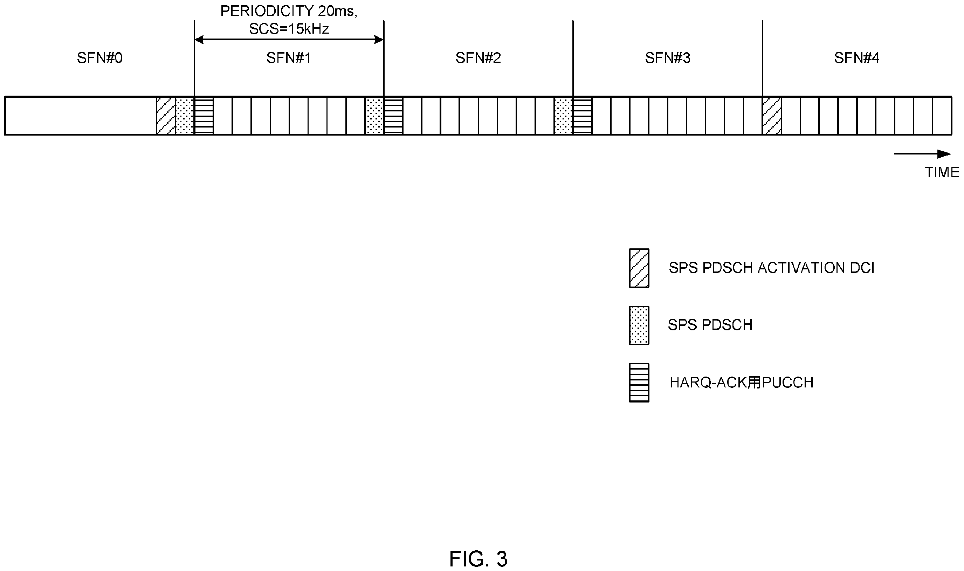

FIG. 3 shows an example in which a semi-persistent PDSCH (SPS PDSCH) is transmitted. In this example, periodicity is configured to be 20 ms and applied subcarrier spacing is configured to be 15 kHz. As a matter of course, PDSCH transmission conditions are not limited thereto.

In FIG. 3, a network indicates SPS PDSCH activation by using DCI. The DCI that indicates SPS PDSCH activation may be, for example, DCI format 1_0/1_1. When having detected the DCI, the UE assumes (or expects) an SPS PDSCH is transmitted in certain periodicity, and performs reception processing of the SPS PDSCH.

The UE may feed back an HARQ-ACK for an SPS PDSCH. For example, the UE may transmit an HARQ-ACK for an SPS PDSCH by using a PUCCH. A condition such as the transmission timing (for example, K0) of an HARQ-ACK (or PUCCH) may be notified to the UE by using DCI that indicates SPS PDSCH activation. Alternatively, the condition such as the transmission timing (for example, K0) of an HARQ-ACK (or PUCCH) may be configured by higher layer signaling (for example, dl-DataToUL-ACK).

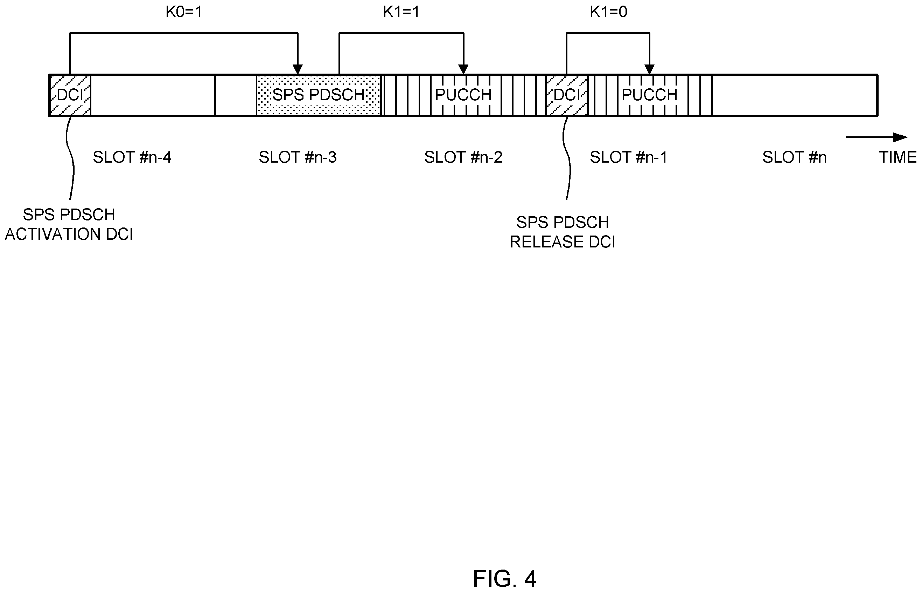

When having received DCI that indicates SPS PDSCH deactivation, the UE may perform control not to perform SPS PDSCH reception processing. The UE may feed back an HARQ-ACK for DCI that indicates SPS PDSCH deactivation. For example, the UE may transmit an HARQ-ACK for DCI by using a PUCCH. A condition such as the transmission timing (for example, K1) of an HARQ-ACK (or PUCCH) may be notified to the UE by using DCI that indicates SPS PDSCH deactivation (refer to FIG. 4).

A case is assumed in which an HARQ-ACK for an SPS PDSCH overlaps with another UL transmission (for example, PUSCH/SRS) in the time domain. In such a case, UL transmissions may be controlled with taken into account the priority of each UL transmission.

Overlapping of an HARQ-ACK for an SPS PDSCH and another UL transmission may be controlled not to occur under a certain condition. For example, when the priority of an HARQ-ACK for an SPS PDSCH is high, another UL transmission (PUSCH/PUCCH) having a low priority may be controlled not to be dynamically scheduled in a region that overlaps with the HARQ-ACK. The UE does not need to assume that another UL transmission having a low priority is scheduled by DCI, overlapping with an HARQ-ACK (high) for an SPS PDSCH.

When the priority of an HARQ-ACK for an SPS PDSCH is low, another UL transmission (PUSCH/PUCCH) may be dynamically scheduled or semi-statically configured in a region that overlaps with the HARQ-ACK.

### (UL Transmission Cancel Indication)

It is assumed that a case in which an UL transmission scheduled later needs to be prioritized over an UL transmission scheduled earlier occurs along with introduction of traffic types having different priorities. For example, a case is conceivable in which after a first UL transmission (for example, eMBB) is scheduled for a first UE, a second UL transmission (for example, URLLC) is desired to be scheduled for a second UE by using resources used for the first UL transmission.

Thus, it is conceivable that, before an UL channel/signal (for example, PUSCH) scheduled earlier is actually transmitted, the UL channel/signal is canceled and another UL channel/signal is scheduled for resources of the canceled UL channel/signal.

Thus, UL cancellation indication has been discussed for cancellation of a certain UL transmission (or UL signal/UL channel). The UL cancellation indication may be referred to as UL cancel indication.

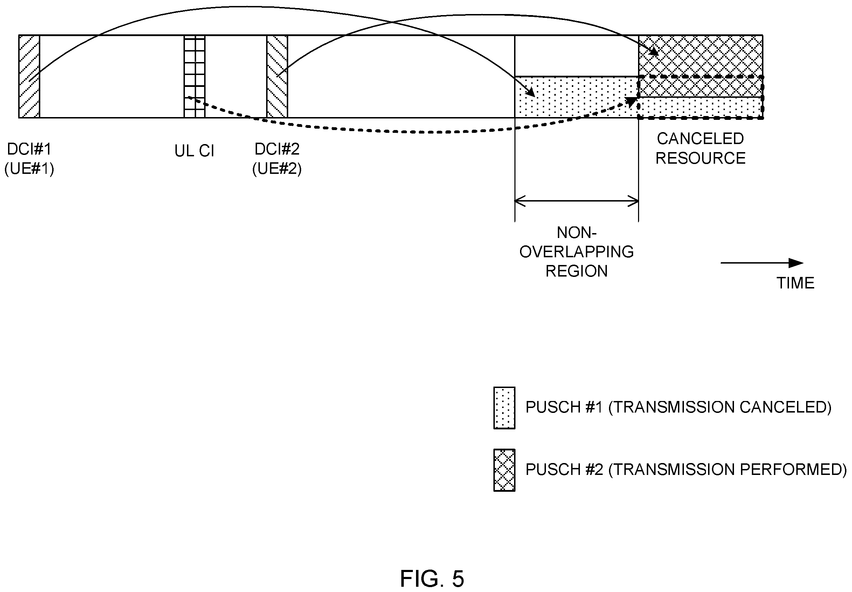

For example, the UL cancel indication cancels an UL transmission (for example, eMBB UL transmission) scheduled/configured for one UE, thereby enabling an UL transmission (for example, URLLC UL transmission) by another UE (refer to FIG. 5, for example). FIG. 5 shows an example in which, when an eMBB UL transmission (for example, PUSCH #1) scheduled for UE #1 overlaps with an UL transmission (for example, PUSCH #2) scheduled for URLLC UE #2, PUSCH #1 is canceled by using the UL cancel indication.

The UL cancel indication may specify at least a resource (for example, frequency resource (PRB) and time resource (symbol)) for which a certain UL transmission is canceled. In this example, a case is shown in which part of a resource used for a transmission of PUSCH #1 corresponds to the resource specified by the UL cancel indication.

In FIG. 5, when the UE #1 detects the UL cancel indication, the UE #1 cancels (stops) an UL transmission. Cancellation of an UL transmission may be interpreted as preempting of the UL transmission, replacement of the UL transmission, and the like.

The UL cancel indication may interrupt/postpone an UL transmission scheduled for a UE having received the UL cancel indication. The UL cancel indication may be used by a UE having received the UL cancel indication to provide notification of a resource for which it is assumed that no transmission of the UE is intended.

To achieve the UL cancel indication, at least group common (GC)-downlink control information (DCI, physical downlink control channel (PDCCH)) may be supported for cancel indication. A certain DCI format (for example, DCI format 2_4) may be used for the DCI.

For example, information related to a frequency resource (for example, PRB) and a time resource (for example, symbol) for which an UL transmission is canceled may be notified to one or more UEs by a certain DCI format. Note that, UE-specific DCI for UL cancel indication may be supported.

The UL cancel indication (for example, DCI format 2_4) may be applied, under a certain condition, only to a certain UL transmission or DCI (for example, UL grant) that indicates/schedules the certain UL transmission. The certain UL transmission may be at least one of a PUSCH or SRS. The certain condition may be such that the ending symbol of a PDCCH used for an UL-granted transmission is located before the first symbol of a PDCCH used for transmission of the UL cancel indication.

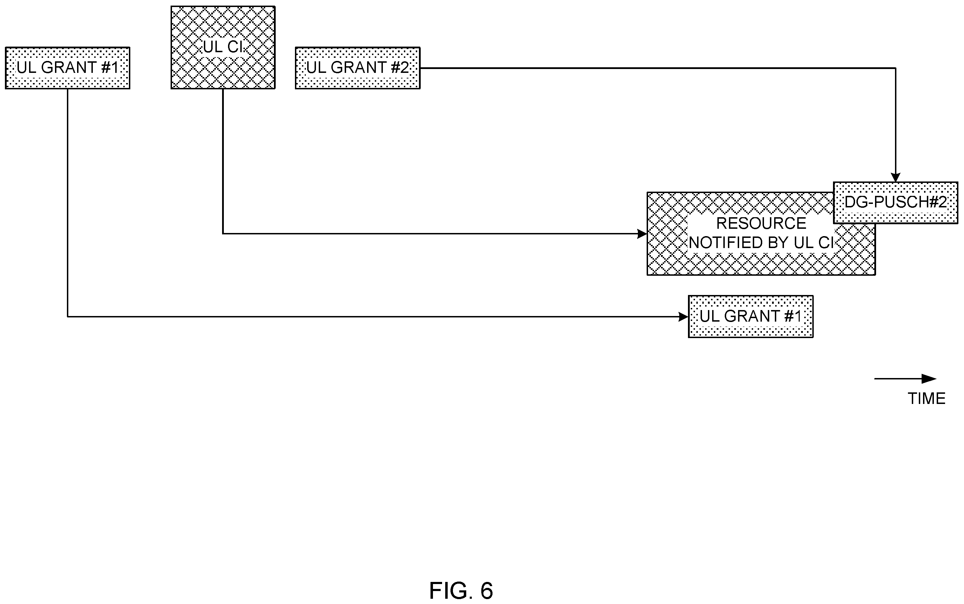

When the certain condition is satisfied, the UE cancels an UL transmission (for example, DG-PUSCH #1) that uses a resource notified by the UL cancel indication (refer to FIG. 6).

On the other hand, when the certain condition is not satisfied, the UE does not need to cancel an UL transmission that uses a resource notified by the UL cancel indication. For example, a case is assumed in which the UE receives an UL grant that schedules an UL transmission that uses a resource notified by the UL cancel indication. In such a case, when the ending symbol of a PDCCH used for the UL-granted transmission is not located before the first symbol of a PDCCH used for transmission of the UL cancel indication, the UE may perform an UL transmission (for example, DG-PUSCH #2) that uses the resource notified by the UL cancel indication (refer to FIG. 6). Note that, in this case, DG-PUSCH #2 may be configured to be scheduled in a region does not overlap with canceled DG-PUSCH #1.

An UL transmission to which the UL cancel indication (for example, UL Cl) notified by DCI is applied may be determined based on whether a higher layer parameter is configured/a priority configured for the UL transmission.

For example, when the UL cancel indication (for example, UL Cl) and priority indication (for example, intra-UE priority indicator) are configured/applied for a certain UE, an UL transmission to which the UL cancel indication is applied may be determined based on whether a certain higher layer parameter (for example, applicabilityforCI) is configured/notified.

When the certain higher layer parameter is configured, the UE may apply the UL cancel indication only to an UL transmission having a low priority (for example, configured with the second priority (low)). In other words, when the certain higher layer parameter is configured, the UE need not apply the UL cancel indication to an UL transmission having a high priority (for example, configured with the first priority (high)). The operation of applying the UL cancel indication only to an UL transmission for which the second priority (low) is notified/configured may be referred to as first UE behavior (Behavioure #1).

When no certain higher layer parameter is configured, the UE may apply the UL cancel indication irrespective of the priorities of UL transmissions. The operation of applying the UL cancel indication irrespective of the priorities of UL transmissions may be referred to as second UE behavior (Behavioure #2).

Alternatively, an UL transmission (for example, priority) to which the UL cancel indication is applied may be configured/notified to the UE by the certain higher layer parameter.

In this manner, scheduling of UL transmissions of different traffic types can be flexibly controlled by controlling UL transmission cancellation based on the UL cancel indication included in DCI.

On the other hand, when a plurality of UL transmissions overlap, it is an issue how to control UL transmission control based on cancellation information of an UL transmission. For example, when a plurality of UL transmissions overlap, it is an issue how to control transmission control based on priorities and transmission control based on the UL cancel indication.

For example, when a first UL transmission overlaps with a second UL transmission, it is an issue how to control application of transmission control (for example, multiplex/drop) based on priorities and transmission control (for example, UL transmission cancel) based on the UL cancel indication.

As for an aspect of the present embodiment, the inventors of the present invention focused on a matter that UL transmission control based on priorities and UL transmission control based on the UL cancel indication are available when a plurality of UL transmissions overlap, and came up with the aspect of the present embodiment through studies on application of a plurality of UL transmission controls.

The inventors of the present invention focused on a matter that overlapping of an HARQ-ACK (high) for an SPS PDSCH with another UL transmission occurs (for example, configured-grant-based PUSCH) and overlapping of an HARQ-ACK (low) for an SPS PDSCH with another UL transmission occurs, and came up with an aspect of the present embodiment through studies on application of a plurality of UL transmission controls in such a case.

Hereinafter, embodiments according to the present disclosure will be described in detail with reference to the drawings. The constitutions described in respective embodiments may each be employed individually, or may be employed in combination.

In the present disclosure, "A/B" may be interpreted as at least one of A and B, and "A/B/C" may be interpreted as at least one of A, B, and C.

The following description is made with an example in which two UL transmissions of a first UL transmission and a second UL transmission overlap/collide, but is also applicable to a case in which three or more UL transmissions overlap/collide.

The following description is made with use of examples that the first UL transmission is a PUCCH for an HARQ-ACK for a dynamically scheduled PDSCH (first aspect) or a PUCCH for an HARQ-ACK for an SPS PDSCH (second aspect), but the present disclosure is not limited thereto. The first UL transmission may be a PUCCH for transmission of another UCI (for example, SR, CSI) other than an HARQ-ACK or may be another UL transmission other than a PUCCH. Similarly, the second UL transmission is, for example, a PUSCH in the following description, but the present invention is not limited thereto. The second UL transmission may be another UL transmission (for example, SRS).

In the following description, the first UL transmission may be an UL signal/UL channel not canceled by the UL cancel indication, and the second UL transmission may be an UL signal/UL channel (for example, PUSCH/SRS) that can be canceled by the UL cancel indication. Alternatively, the first UL transmission and the second UL transmission may be UL signals/UL channels that can be canceled by the UL cancel indication.

### (First Aspect)

A first aspect will be described for a case in which the UL transmission control based on priorities and the UL transmission control based on the UL cancel indication are applied to the first UL transmission and the second UL transmission that overlap with each other.

The UL transmission control based on priorities may be first operation that multiplexes/maps the first UL transmission and the second UL transmission to a common UL channel based on priorities, or second operation that prioritizes one of the first UL transmission and the second UL transmission and drops the other based on priorities. The first operation may be applied when the first UL transmission and the second UL transmission have the same priority, and the second operation may be applied when the first UL transmission and the second UL transmission have different priorities.

The UL transmission control based on the UL cancel indication (for example, DCI format 2_4) may be operation that cancels an UL transmission that uses at least part of a resource notified by the UL cancel indication. The UL transmission control based on the UL cancel indication may be applied when the ending symbol of a PDCCH used for UL-granted transmission is located before the first symbol of a PDCCH used for transmission of the UL cancel indication.

When the first UL transmission overlaps with the second UL transmission, the UE may control UL transmissions by using at least one of Operations 1-1 to 1-3 below.

### <Operation 1-1>

The UE performs such control that one of first transmission control (for example, UL transmission control based on priorities) and second transmission control (for example, UL transmission control based on the UL cancel indication) is constantly applied in first (or in priority) and then the other is applied.

For example, the UE may apply/prioritize the UL transmission control based on priorities (for example, UL intra-UE multiplexing/prioritization) and then apply the UL transmission control (UL cancelation) based on the UL cancel indication.

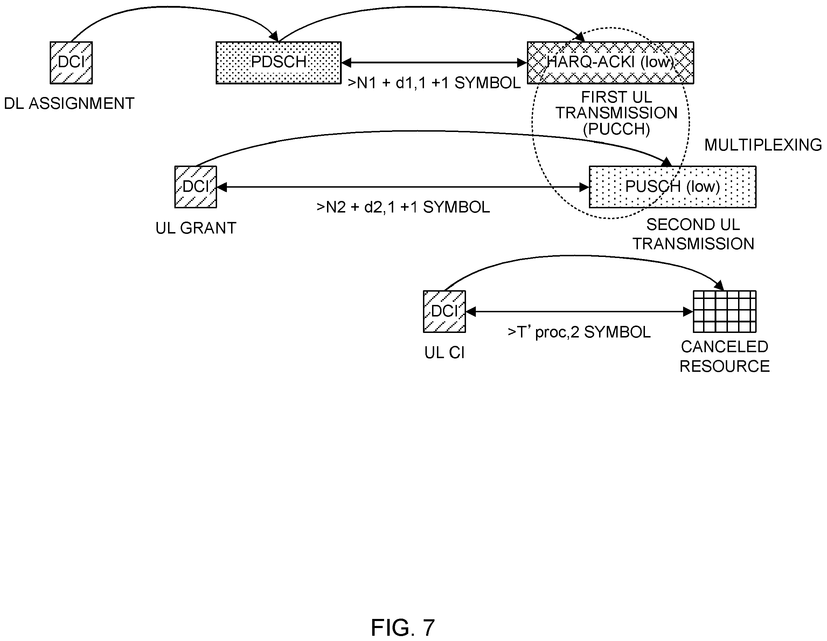

FIG. 7 shows a case in which the first UL transmission configured with the second priority (low) overlaps with the second UL transmission configured with the second priority (low) and the second UL transmission uses part/all of a resource notified by the UL cancel indication.

In this case, the first UL transmission is an HARQ-ACK for a PDSCH scheduled by DCI (or PUCCH for transmission of the HARQ-ACK). This case shows that the second UL transmission corresponds to a PUSCH dynamically scheduled by DCI (or UL data transmitted by the PUSCH).

The UE may determine the transmission timing of an HARQ-ACK (or a PUCCH for the HARQ-ACK) based on information (for example, K) included in DCI that schedules a PDSCH. Here, a case that the offset between the PDSCH and the PUCCH for the HARQ-ACK satisfies a certain timeline (for example, is larger than N1 + d_{1,1} + 1 symbols) is illustrated. The value N1 may be a value determined based on at least one of PDSCH processing capability, subcarrier spacing, and higher layer parameter (dmrs-AdditionalPosition) related to DMRS additional position. The value d_{1,1} may be a value determined based on PDSCH processing capability, PDSCH mapping type, corresponding PDCCH, and the number of symbols for PDSCH.

The UE may determine the transmission timing of a PUSCH, based on information (for example, K) included in DCI that schedules the PUSCH. Here, a case that the offset between the DCI (or PDCCH) and the PUSCH satisfies a certain timeline (for example, is larger than N2 + d_{2,1} + 1 symbols) is illustrated. The value N2 may be a value determined based on at least one of PUSCH processing capability, subcarrier spacing, and higher layer parameter (dmrs-AdditionalPosition) related to DMRS additional position. d_{2,1} may be a value determined based on the configuration of PUSCH allocation symbols. For example, the value d_{2,1} may be zero (d_{2,1} = 0) when the first symbol of PUSCH allocation is constituted only by a DMRS, and d_{2,1} may be one (d_{2,1} = 1) otherwise.

The UE may determine the position of an UL canceled resource based on the UL cancel indication. Here, a case that the offset between DCI (or PDCCH) and the UL canceled resource satisfies a certain timeline (for example, is larger than T'_{proc,2} symbols) is illustrated. T'_{proc,2} may be N2 + d_{2,1} symbols. N2 may be a value determined based on at least one of PUSCH processing capability, subcarrier spacing, and higher layer parameter (dmrs-AdditionalPosition) related to DMRS additional position. Alternatively, as N2, UE capability 2 may be applied. d_{2,1} may be indicated by d_{offset}·2^{-□UL}/2^{-□}. d_{offset} may be a value notified by a higher layer parameter (for example, delta_offset). µ may correspond to a minimum subcarrier spacing among a PDCCH subcarrier spacing configuration and a minimum subcarrier spacing configuration configured by a higher layer parameter.

Note that, when the certain timeline is not satisfied, the transmission control based on priorities/the transmission control based on the UL cancel indication need not be applied.

In FIG. 7, a case is shown that a PDCCH (for example, the ending symbol thereof) used for transmission of DCI that schedules a PUSCH is located before a PDCCH (for example, the first symbol thereof) used for transmission of the UL cancel indication. Also shown is a case that a PDCCH (for example, the ending symbol thereof) used for transmission of DCI that schedules a PDSCH is located before the PDCCH (for example, the first symbol thereof) used for transmission of the UL cancel indication.

The UE first performs the UL transmission control based on priorities. In FIG. 7, the UE multiplexes the first UL transmission and the second UL transmission having the same priority to a common UL channel. In this example, the UE performs control to multiplex the first UL transmission (HARQ-ACK) to the second UL transmission (in this example, PUSCH). The UL channels to be multiplexed may be defined in specifications in advance or may be notified from a network to the UE by DCI/higher layer signaling.

Subsequently, the UE performs the UL transmission control based on the UL cancel indication. In FIG. 7, the UE cancels the second UL transmission since the resource notified by the UL cancel indication overlaps with the allocated resource of the second UL transmission (in this example, PUSCH) in the time domain. In this example, the HARQ-ACK (first UL transmission) multiplexed to the PUSCH is canceled as well.

Note that, the second UL transmission may not be canceled and may be transmitted when the ending symbol of a PDCCH used for transmission of DCI that schedules a PUSCH is located after the first symbol of a PDCCH used for transmission of the UL cancel indication.

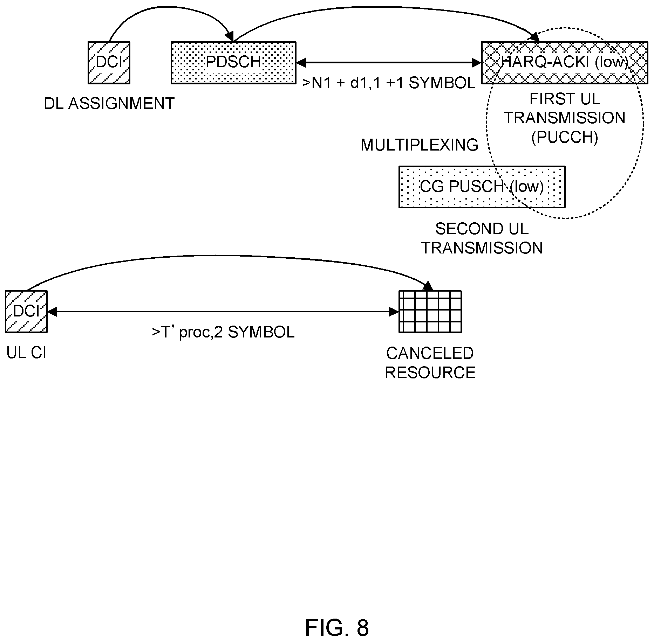

FIG. 8 shows a case in which the second UL transmission is a configured-grant-based PUSCH (for example, PUSCH not dynamically scheduled by DCI) in FIG. 7. In the shown case, the ending symbol of the PDCCH used for transmission of DCI that schedules a PDSCH is located after the first symbol of the PDCCH used for transmission of the UL cancel indication.

The UE first performs the UL transmission control based on priorities. In FIG. 8, the UE multiplexes the first UL transmission and the second UL transmission having the same priority to a common UL channel. In this example, the UE performs control to multiplex the first UL transmission (HARQ-ACK) to the second UL transmission (in this example, configured-grant-based PUSCH).

Subsequently, the UE performs the UL transmission control based on the UL cancel indication. In FIG. 8, the UE cancels the second UL transmission since the resource notified by the UL cancel indication overlaps with the allocated resource of the second UL transmission (in this example, PUSCH) in the time domain. In this example, the HARQ-ACK (first UL transmission) multiplexed to the PUSCH is canceled as well.

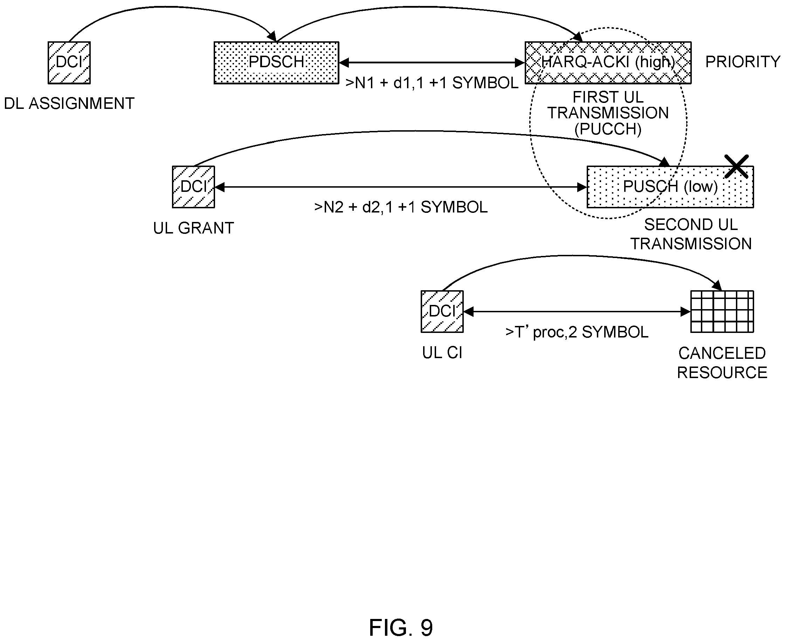

FIG. 9 shows a case in which the first UL transmission configured with the first priority (high) overlaps with the second UL transmission configured with the second priority (low) and the second UL transmission uses part/all of a resource notified by the UL cancel indication.

In this case, the first UL transmission is an HARQ-ACK for a PDSCH scheduled by DCI (or PUCCH for transmission of the HARQ-ACK). The second UL transmission corresponds to a case of a PUSCH dynamically scheduled by DCI (or UL data transmitted by the PUSCH).

In FIG. 9, a case is shown that the ending symbol of a PDCCH used for transmission of DCI that schedules a PUSCH is located before the first symbol of a PDCCH used for transmission of the UL cancel indication. A case is shown that the ending symbol of a PDCCH used for transmission of DCI that schedules a PDSCH is located before the first symbol of a PDCCH used for transmission of the UL cancel indication.

The UE first performs the UL transmission control based on priorities. In FIG. 9, the UE prioritizes the first UL transmission having a high priority and drops (or cancels) the second UL transmission having a low priority.

Subsequently, the UE performs the UL transmission control based on the UL cancel indication. In FIG. 9, the resource notified by the UL cancel indication overlaps with the allocated resource of the second UL transmission (in this example, PUSCH) in the time domain, and the UE drops the second UL transmission. Thus, the UE may perform control to perform the first UL transmission but not to perform the second UL transmission.

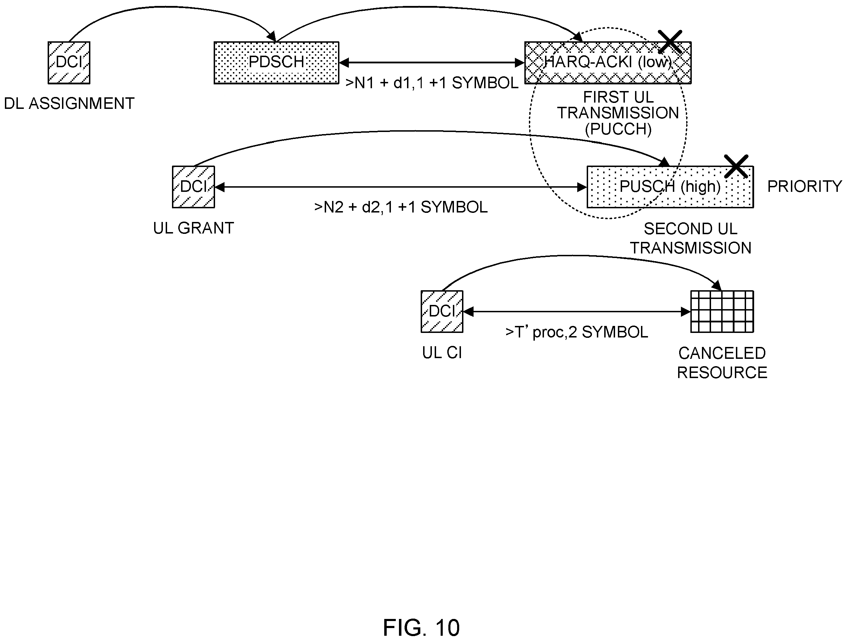

FIG. 10 shows a case in which the first UL transmission configured with the second priority (low) overlaps with the second UL transmission configured with the first priority (high) and the second UL transmission uses part/all of a resource notified by the UL cancel indication.

In this case, the first UL transmission is an HARQ-ACK for a PDSCH scheduled by DCI (or PUCCH for transmission of the HARQ-ACK). The second UL transmission corresponds to a case of a PUSCH dynamically scheduled by DCI (or UL data transmitted by the PUSCH).

In FIG. 10, a case is shown that the ending symbol of a PDCCH used for transmission of DCI that schedules a PUSCH is located before the first symbol of a PDCCH used for transmission of the UL cancel indication. A case is shown that the ending symbol of a PDCCH used for transmission of DCI that schedules a PDSCH is located before the first symbol of a PDCCH used for transmission of the UL cancel indication.

The UE first performs the UL transmission control based on priorities. In FIG. 10, the UE prioritizes the second UL transmission having a high priority and drops (or cancels) the first UL transmission having a low priority.

Subsequently, the UE performs the UL transmission control based on the UL cancel indication. In FIG. 10, the UE cancels the second UL transmission since the resource notified by the UL cancel indication overlaps with the allocated resource of the second UL transmission (in this example, PUSCH) in the time domain.

In this manner, when the UL transmission control based on priorities is first applied and then the UL transmission control based on the UL cancel indication is applied, the UL transmission control based on priorities can be performed without being affected by the UL cancel indication.

Note that, the UE may apply/prioritize the UL transmission control (UL cancelation) based on the UL cancel indication and then apply the UL transmission control based on priorities (for example, UL intra-UE multiplexing/prioritization).

### <Operation 1-2>

The UE may autonomously determine transmission control to be applied in first (or in priority) among first transmission control (for example, the UL transmission control based on priorities) and second transmission control (for example, the UL transmission control based on the UL cancel indication). Alternatively, the transmission control to be applied in first (or in priority) may be configured for the UE by a network through higher layer signaling or the like.

### <Operation 1-3>

The UE may determine, based on a certain condition, transmission control to be applied in first (or in priority) among first transmission control (for example, the UL transmission control based on priorities) and second transmission control (for example, the UL transmission control based on the UL cancel indication). The certain condition may be, for example, the reception timing of corresponding DCI (or PDCCH).

For example, the UE may determine the application order of UL transmission controls based on the reception timing of DCI corresponding to the first transmission control/DCI corresponding to the second transmission control and the reception timing of DCI corresponding to the UL cancel indication.

### <Case 1>

A case is assumed in which the UE receives at least one of DCI that schedules a PDSCH and DCI that schedules a PUSCH, and then receives DCI that specifies the UL cancel indication, and a resource used for PUSCH transmission is specified by the UL cancel indication. In such a case, the UE may first apply the UL transmission control based on priorities and then apply the UL transmission control based on the UL cancel indication. Such operation may be applied irrespective of HARQ-ACK priorities/PUSCH priorities.

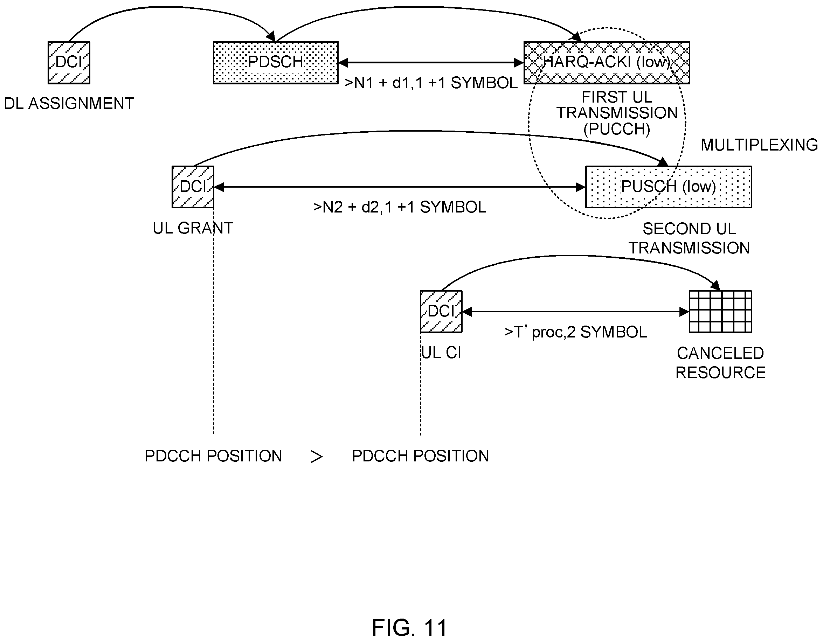

FIG. 11 shows a case in which the first UL transmission configured with the second priority (low) overlaps with the second UL transmission configured with the second priority (low) and the second UL transmission uses part/all of a resource notified by the UL cancel indication.

In this case, the first UL transmission is an HARQ-ACK for a PDSCH scheduled by DCI (or PUCCH for transmission of the HARQ-ACK). The second UL transmission corresponds to a case of a PUSCH dynamically scheduled by DCI (or UL data transmitted by the PUSCH).

The UE may determine the transmission timing of an HARQ-ACK (or a PUCCH for the HARQ-ACK) based on information included in DCI that schedules a PDSCH. Here, the offset between the PDSCH and the PUCCH for the HARQ-ACK satisfies a certain timeline (> N1 + d_{1,1} + 1 symbols).

The UE may determine the transmission timing of a PUSCH based on information included in DCI that schedules the PUSCH. Here, the offset between the DCI (or PDCCH) and the PUSCH satisfies a certain timeline (> N2 + d_{2,1} + 1 symbols).

The UE may determine the position of an UL canceled resource based on the UL cancel indication. Here, the offset between DCI (or PDCCH) and the UL canceled resource satisfies a certain timeline (> T'_{proc,2} symbols).

Note that, when the certain timeline is not satisfied, the transmission control based on priorities/the transmission control based on the UL cancel indication need not be applied.

In FIG. 11, a case that DCI to schedule a PDSCH and DCI to schedule a PUSCH are received/detected and then DCI to indicate the UL cancel indication is received/detected is illustrated. In this case, the UE performs the UL transmission control based on priorities and then performs the UL transmission control based on the UL cancel indication.

In FIG. 11, the UE first performs the UL transmission control based on priorities. In FIG. 11, the UE multiplexes the first UL transmission and the second UL transmission having the same priority to a common UL channel. In this example, the UE performs control to multiplex the first UL transmission (HARQ-ACK) to the second UL transmission (in this example, PUSCH).

Subsequently, the UE performs the UL transmission control based on the UL cancel indication. In FIG. 11, the UE cancels the second UL transmission since the resource notified by the UL cancel indication overlaps with the allocated resource of the second UL transmission (in this example, PUSCH) in the time domain. In this example, the HARQ-ACK (first UL transmission) multiplexed to the PUSCH is canceled as well.

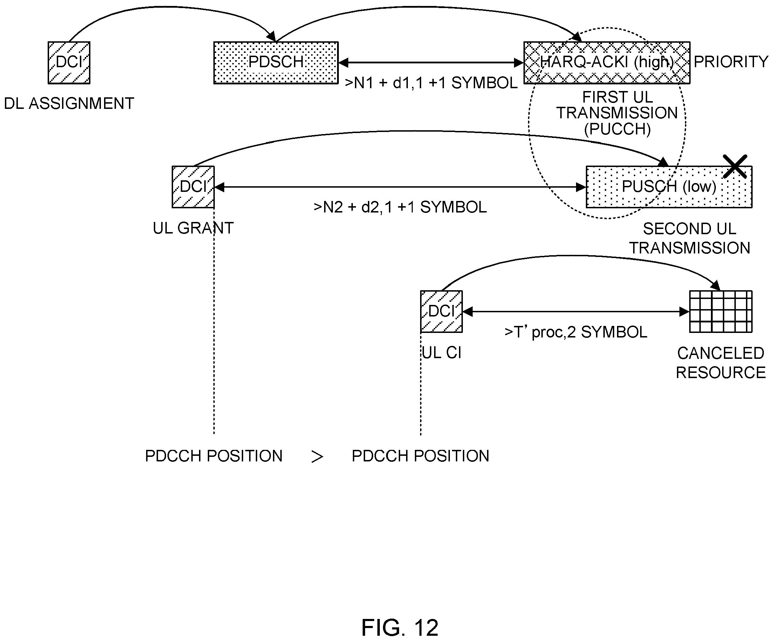

FIG. 12 shows a case in which the first UL transmission is configured with the first priority (high) in FIG. 11. Other configuration is same as that of FIG. 11.

In FIG. 12, the UE first performs the UL transmission control based on priorities. In FIG. 12, the UE prioritizes the first UL transmission having a high priority and drops (or cancels) the second UL transmission having a low priority.

Subsequently, the UE performs the UL transmission control based on the UL cancel indication. In FIG. 12, the resource notified by the UL cancel indication overlaps with the allocated resource of the second UL transmission (in this example, PUSCH) in the time domain, and the UE drops the second UL transmission. Thus, the UE may perform control to perform the first UL transmission but not to perform the second UL transmission.

### <Case 2>

A case is assumed in which the UE receives DCI that specifies the UL cancel indication and then receives DCI that schedules a PDSCH (or HARQ-ACK corresponding to the PDSCH), and a configured-grant-based PUSCH, and a resource used for PUSCH transmission is specified by the UL cancel indication. In such a case, the UE may first apply the UL transmission control based on the UL cancel indication and then apply the UL transmission control based on priorities. Such operation may be applied irrespective of HARQ-ACK priorities/PUSCH priorities.

When the second UL transmission is a configured-grant-based PUSCH, the UE may determine the application order of UL transmission controls based on the reception timing of the DCI that specifies the UL cancel indication and the reception timing of the configured-grant-based PUSCH.

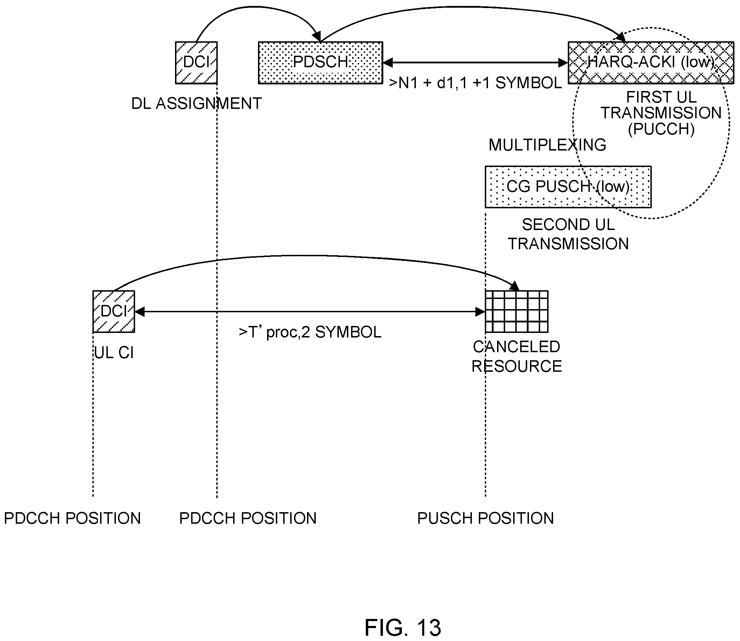

FIG. 13 shows a case in which the first UL transmission configured with the second priority (low) overlaps with the second UL transmission configured with the second priority (low) and the second UL transmission uses part/all of a resource notified by the UL cancel indication.

In this case, the first UL transmission is an HARQ-ACK for a PDSCH scheduled by DCI (or PUCCH for transmission of the HARQ-ACK). This case shows that the second UL transmission is a configured-grant-based PUSCH (or UL data transmitted by the PUSCH).

The UE may determine the transmission timing of an HARQ-ACK (or a PUCCH for the HARQ-ACK) based on information included in DCI that schedules a PDSCH. Here, the offset between the PDSCH and the PUCCH for the HARQ-ACK satisfies a certain timeline (> N1 + d_{1,1} + 1 symbols).

The UE may determine the position of an UL canceled resource based on the UL cancel indication. Here, the offset between DCI (or PDCCH) and the UL canceled resource satisfies a certain timeline (> T'_{proc,2} symbols).

Note that, when the certain timeline is not satisfied, the transmission control based on priorities and the transmission control based on the UL cancel indication need not be applied.

In FIG. 13, a case that DCI that indicates the UL cancel indication is reception/detected and then DCI that schedules a PDSCH and DCI that schedules a PUSCH are received/detected is illustrated. In this case, the UE performs the UL transmission control based on the UL cancel indication and then performs the UL transmission control based on priorities.

In FIG. 13, the UE first performs the UL transmission control based on the UL cancel indication. In FIG. 13, the UE cancels the second UL transmission since the resource notified by the UL cancel indication overlaps with the allocated resource of the second UL transmission (in this example, PUSCH) in the time domain.

Subsequently, in FIG. 13, the UE the UE performs the UL transmission control based on priorities. However, since the second UL transmission is already canceled and the first UL transmission does not overlap with the second UL transmission, the UE may perform control to transmit the first UL transmission.

In this manner, when the order of applied UL transmission controls is determined based on the reception timing of DCI, it is possible to perform, even when overlapping UL transmissions have the same priority, one of the UL transmissions without canceling.

### (Second Aspect)

The second aspect will be described for a case in which the first UL transmission is an HARQ-ACK for an SPS PDSCH (or PUCCH for transmission of the HARQ-ACK). The first and second aspects may be applied in combination.

When the second UL transmission is an UL transmission (for example, configured-grant-based PUSCH) that is not scheduled by DCI, the UE may control UL transmissions by using at least one of Operations 2-1-1 and 2-1-2 below.

### <Operation 2-1-1>

The UE performs control to apply one of first transmission control (for example, the UL transmission control based on priorities) and second transmission control (for example, the UL transmission control based on the UL cancel indication) in first (or in priority) and then apply the other.

For example, the UE may apply/prioritize the UL transmission control based on priorities (for example, UL intra-UE multiplexing/prioritization) and then apply the UL transmission control (UL cancelation) based on the UL cancel indication.

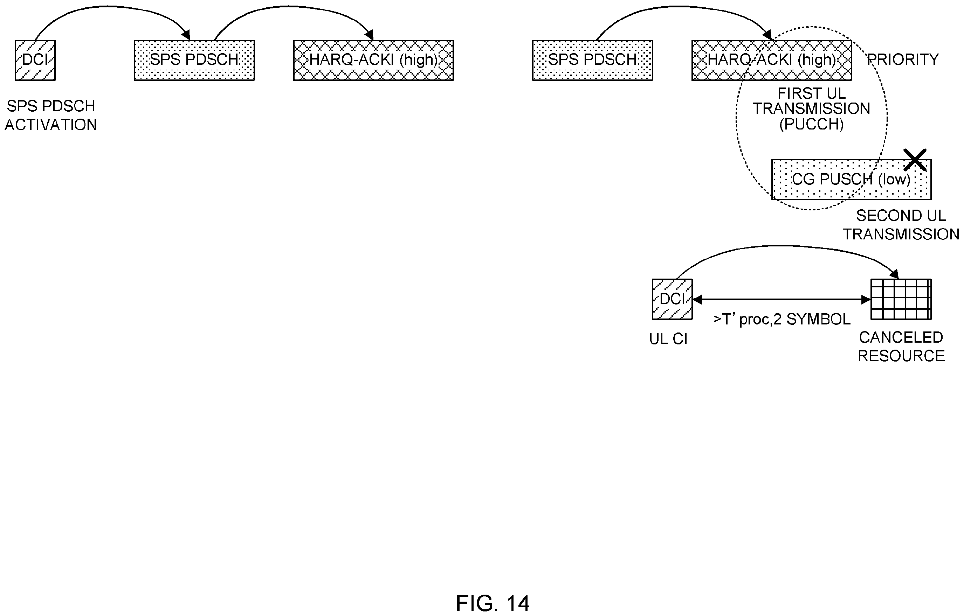

FIG. 14 shows a case in which the first UL transmission configured with the first priority (high) overlaps with the second UL transmission configured with the second priority (low) and the second UL transmission uses part/all of a resource notified by the UL cancel indication.

In this case, the first UL transmission is an HARQ-ACK for an SPS PDSCH (or PUCCH for transmission of the HARQ-ACK) that is activated by DCI. This case shows that the second UL transmission is a configured-grant-based PUSCH (or UL data transmitted by the PUSCH).

The UE first performs the UL transmission control based on priorities. In FIG. 14, the UE prioritizes the first UL transmission having a high priority and drops (or cancels) the second UL transmission having a low priority.

Subsequently, the UE performs the UL transmission control based on the UL cancel indication. In FIG. 14, the resource notified by the UL cancel indication overlaps with the allocated resource of the second UL transmission (in this example, PUSCH) in the time domain, and the UE drops the second UL transmission. Thus, the UE may perform control to perform the first UL transmission but not to perform the second UL transmission.

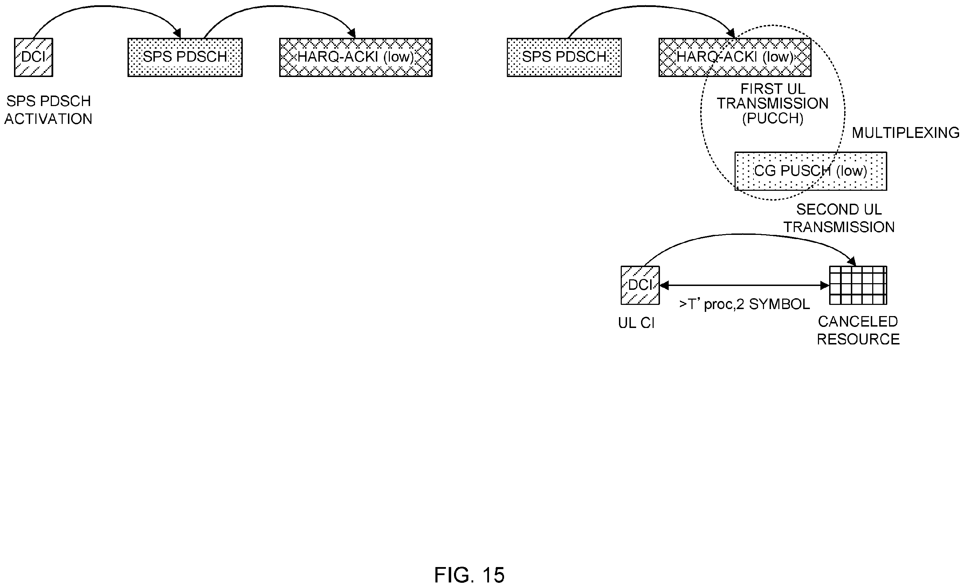

FIG. 15 shows a case in which the first UL transmission configured with the second priority (high) overlaps with the second UL transmission configured with the second priority (low) and the second UL transmission uses part/all of a resource notified by the UL cancel indication.

In this case, the first UL transmission is an HARQ-ACK for an SPS PDSCH (or PUCCH for transmission of the HARQ-ACK) that is activated by DCI. This case shows that the second UL transmission is a configured-grant-based PUSCH (or UL data transmitted by the PUSCH).

The UE first performs the UL transmission control based on priorities. In FIG. 15, the UE multiplexes the first UL transmission and the second UL transmission having the same priority to a common UL channel. In this example, the UE performs control to multiplex the first UL transmission (HARQ-ACK) to the second UL transmission (in this example, PUSCH).

Subsequently, the UE performs the UL transmission control based on the UL cancel indication. In FIG. 15, the UE cancels the second UL transmission since the resource notified by the UL cancel indication overlaps with the allocated resource of the second UL transmission (in this example, PUSCH) in the time domain. In this example, the HARQ-ACK (first UL transmission) multiplexed to the PUSCH is canceled as well.

When the UL transmission control based on priorities is first applied and then the UL transmission control based on the UL cancel indication is applied, the UL transmission control based on priorities can be performed without being affected by the UL cancel indication.

Note that, the UE may apply/prioritize the UL transmission control (UL cancelation) based on the UL cancel indication and then apply the UL transmission control based on priorities (for example, UL intra-UE multiplexing/prioritization).

### <Operation 2-1-2>

The UE may autonomously determine transmission control to be applied in first (or in priority) among first transmission control (for example, the UL transmission control based on priorities) and second transmission control (for example, the UL transmission control based on the UL cancel indication). Alternatively, the transmission control to be applied in first (or in priority) may be configured for the UE by a network through higher layer signaling or the like.

When the second UL transmission is an UL transmission (for example, dynamic grant-based PUSCH) that is scheduled by DCI, the UE may control UL transmissions by using at least one of Operations 2-2-1 to 2-2-3 below.

### <Operation 2-2-1>

The UE performs control to apply one of first transmission control (for example, the UL transmission control based on priorities) and second transmission control (for example, the UL transmission control based on the UL cancel indication) in first (or in priority) and then apply the other.

For example, the UE may apply/prioritize the UL transmission control based on priorities (for example, UL intra-UE multiplexing/prioritization) and then apply the UL transmission control (UL cancelation) based on the UL cancel indication.

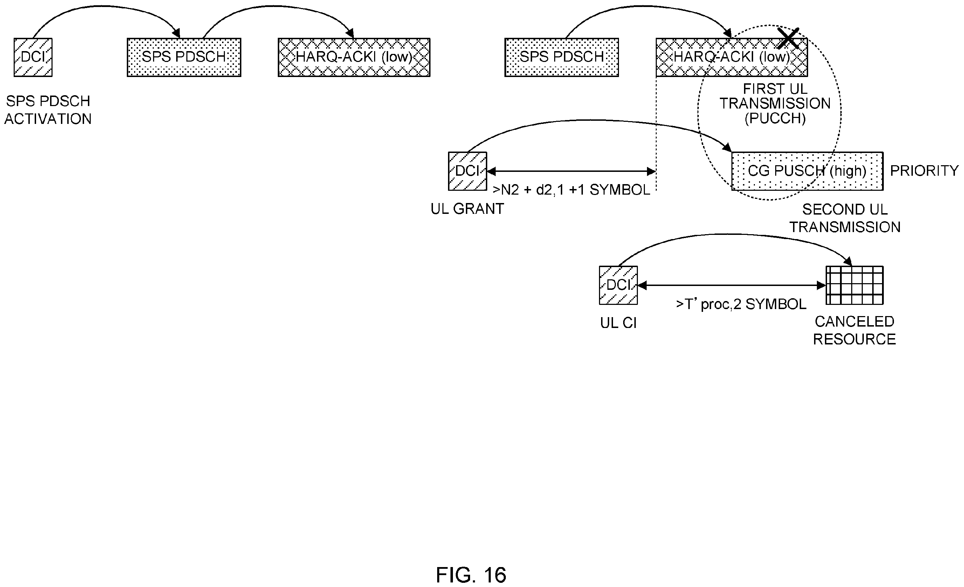

FIG. 16 shows a case in which the first UL transmission configured with the second priority (high) overlaps with the second UL transmission configured with the first priority (high) and the second UL transmission uses part/all of a resource notified by the UL cancel indication.

In this case, the first UL transmission is an HARQ-ACK for an SPS PDSCH (or PUCCH for transmission of the HARQ-ACK) that is activated by DCI. This case shows that the second UL transmission corresponds to a PUSCH dynamically scheduled by DCI (or UL data transmitted by the PUSCH).

The UE first performs the UL transmission control based on priorities. In FIG. 16, the UE prioritizes the second UL transmission having a high priority and drops (or cancels) the first UL transmission having a low priority.

Subsequently, the UE performs the UL transmission control based on the UL cancel indication. In FIG. 16, the UE cancels the second UL transmission since the resource notified by the UL cancel indication overlaps with the allocated resource of the second UL transmission (in this example, PUSCH) in the time domain.

When the UL transmission control based on priorities is first applied and then the UL transmission control based on the UL cancel indication is applied, the UL transmission control based on priorities can be performed without being affected by the UL cancel indication.

Note that, the UE may apply/prioritize the UL transmission control (UL cancelation) based on the UL cancel indication and then apply the UL transmission control based on priorities (for example, UL intra-UE multiplexing/prioritization). In this case, in FIG. 16, the second UL transmission may be canceled and the first UL transmission may be performed.

### <Operation 2-2-2>

The UE may autonomously determine transmission control to be applied in first (or in priority) among first transmission control (for example, the UL transmission control based on priorities) and second transmission control (for example, the UL transmission control based on the UL cancel indication). Alternatively, the transmission control to be applied in first (or in priority) may be configured for the UE by a network through higher layer signaling or the like.

### <Operation 2-2-3>

The UE may determine, based on a certain condition, transmission control to be applied in first (or in priority) among first transmission control (for example, the UL transmission control based on priorities) and second transmission control (for example, the UL transmission control based on the UL cancel indication). The certain condition may be, for example, the reception timing of corresponding DCI (or PDCCH).

For example, the UE may determine the application order of transmission controls based on the reception timing of DCI corresponding to the first transmission control/DCI corresponding to the second transmission control and the reception timing of DCI corresponding to the UL cancel indication.

### <Case 1>

A case is assumed in which the UE receives DCI that activates an SPS PDSCH and DCI that schedules a PUSCH and then receives DCI that specifies the UL cancel indication, and a resource used for PUSCH transmission is specified by the UL cancel indication. In such a case, the UE may first apply the UL transmission control based on priorities and then apply the UL transmission control based on the UL cancel indication. Such operation may be applied when the HARQ-ACK priority is the second priority (low) and the PUSCH priority is the first priority (high).

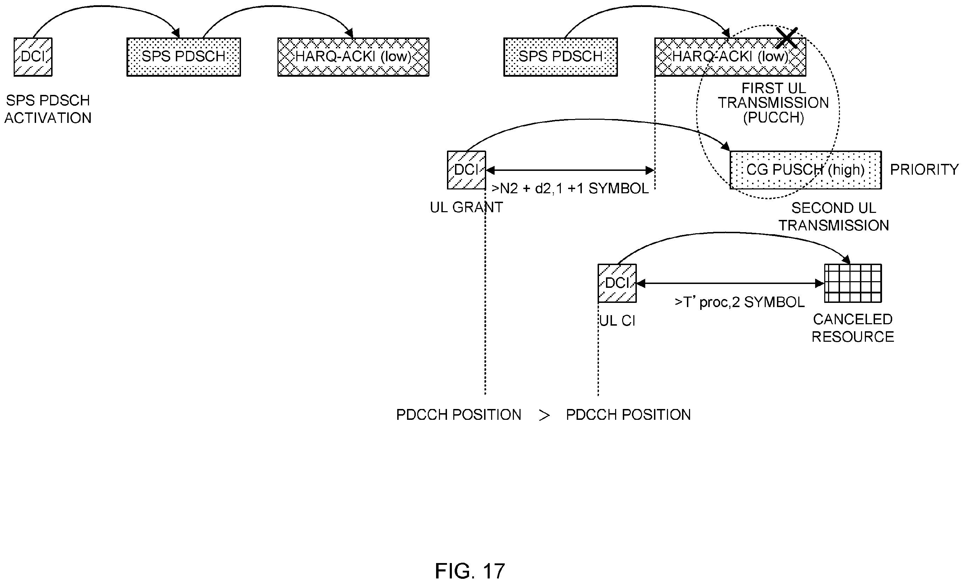

FIG. 17 shows a case in which the first UL transmission configured with the second priority (low) overlaps with the second UL transmission configured with the second priority (low) and the second UL transmission uses part/all of a resource notified by the UL cancel indication.

In this case, the first UL transmission is an HARQ-ACK for a PDSCH scheduled by DCI (or PUCCH for transmission of the HARQ-ACK). This case shows that the second UL transmission corresponds to a PUSCH dynamically scheduled by DCI (or UL data transmitted by the PUSCH).

The UE may determine the transmission timing of an HARQ-ACK (or a PUCCH for the HARQ-ACK) based on information included in DCI that activates a PDSCH.

The UE may determine the transmission timing of a PUSCH based on information included in DCI that schedules the PUSCH. Here, the offset between the DCI (or PDCCH) and the PUSCH satisfies a certain timeline (> N2 + d_{2,1} + 1 symbols).

The UE may determine the position of an UL canceled resource based on the UL cancel indication. Here, the offset between DCI (or PDCCH) and the UL canceled resource satisfies a certain timeline (> T'_{proc,2} symbols).

Note that, when the certain timeline is not satisfied, the transmission control based on priorities and the transmission control based on the UL cancel indication need not be applied.

In FIG. 17, a case that DCI that activates a PDSCH and DCI that schedules a PUSCH are received/detected and then DCI that indicates the UL cancel indication is received/detected is illustrated. In this case, the UE performs the UL transmission control based on priorities and then performs the UL transmission control based on the UL cancel indication.

In FIG. 17, the UE first performs the UL transmission control based on priorities. In FIG. 17, the UE prioritizes the second UL transmission having a high priority and drops (or cancels) the first UL transmission having a low priority.

Subsequently, the UE performs the UL transmission control based on the UL cancel indication. In FIG. 17, the UE cancels the second UL transmission since the resource notified by the UL cancel indication overlaps with the allocated resource of the second UL transmission (in this example, PUSCH) in the time domain.

### <Case 2>

A case is assumed in which the UE receives DCI that specifies the UL cancel indication and then receives DCI that schedules a PUSCH, and a resource used for PUSCH transmission is specified by the UL cancel indication. In such a case, the UE may first apply the UL transmission control based on the UL cancel indication and then apply the UL transmission control based on priorities.

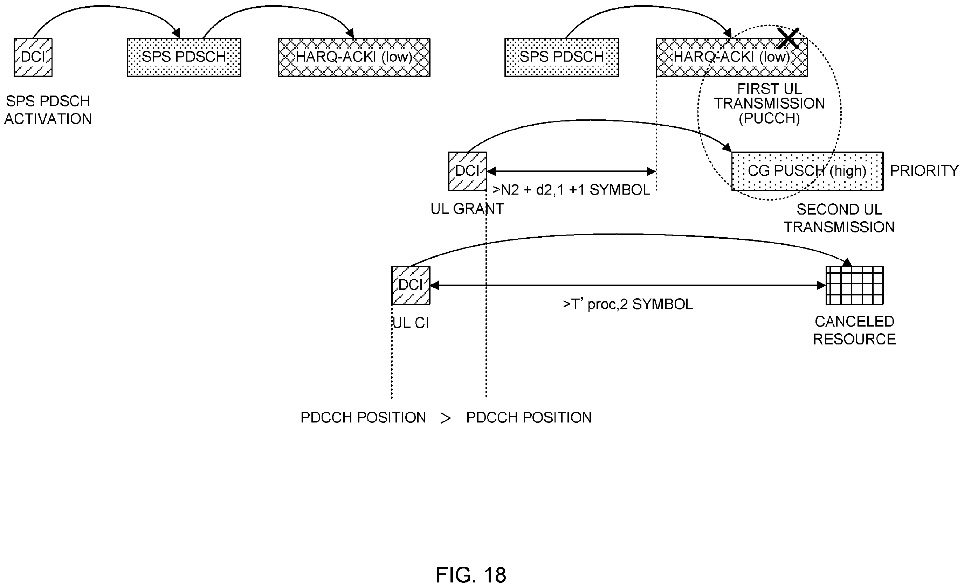

FIG. 18 shows a case in which the first UL transmission configured with the second priority (low) overlaps with the second UL transmission configured with the first priority (high) and the second UL transmission uses part/all of a resource notified by the UL cancel indication.

In this case, the first UL transmission is an HARQ-ACK for an SPS PDSCH (or PUCCH for transmission of the HARQ-ACK) that is activated by DCI. This case shows that the second UL transmission corresponds to a PUSCH dynamically scheduled by DCI (or UL data transmitted by the PUSCH).

The UE may determine the transmission timing of an HARQ-ACK (or a PUCCH for the HARQ-ACK) based on information included in DCI that activates a PDSCH.

The UE may determine the transmission timing of a PUSCH based on information included in DCI that schedules the PUSCH. Here, the offset between the DCI (or PDCCH) and the PUSCH satisfies a certain timeline (> N2 + d_{2,1} + 1 symbols).

The UE may determine the position of an UL canceled resource based on the UL cancel indication. Here, the offset between DCI (or PDCCH) and the UL canceled resource satisfies a certain timeline (> T'_{proc,2} symbols).

Note that, when the certain timeline is not satisfied, the transmission control based on priorities and the transmission control based on the UL cancel indication need not be applied.

In FIG. 18, a case that DCI that indicates the UL cancel indication is received/detected and then DCI that schedules a PUSCH is received/detected is illustrated. In this case, the UE performs the UL transmission control based on the UL cancel indication and then performs the UL transmission control based on priorities.

In FIG. 18, the UE first performs the UL transmission control based on the UL cancel indication. In FIG. 18, the UE cancels the second UL transmission since the resource notified by the UL cancel indication overlaps with the allocated resource of the second UL transmission (in this example, PUSCH) in the time domain.

Subsequently, in FIG. 18, the UE the UE performs the UL transmission control based on priorities. However, since the second UL transmission is already canceled and the first UL transmission does not overlap with the second UL transmission, the UE may perform control to transmit the first UL transmission.

Alternatively, since the DCI used to schedule a PUSCH is transmitted after the DCI that notifies the UL cancel indication, it may be controlled not to cancel the second UL transmission (PUSCH). In this case, the UE may perform control to drop the first UL transmission and transmit the second UL transmission through the UL transmission control based on priorities, which is subsequently applied.

### (Variations)

In the first and second aspects, an UL transmission to which the UL cancel indication is applied may be controlled through configuration of higher layer signaling. For example, when certain higher layer signaling (for example, applicabilityforCI) is configured, cancellation by the UL cancel indication may be applied to an UL transmission of the second priority (low) and the UL cancel indication may not be applied to an UL transmission of the first priority. When the certain higher layer signaling is not configured, the UL cancel indication may be applied irrespective of the priorities of UL transmissions.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

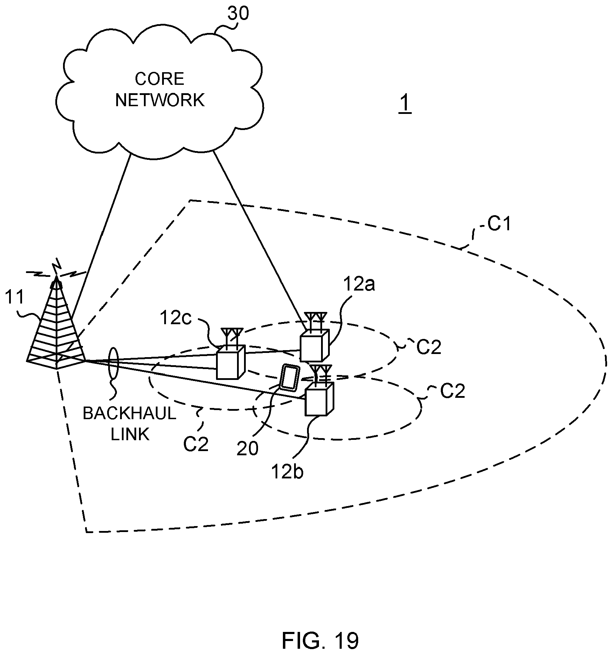

FIG. 19 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

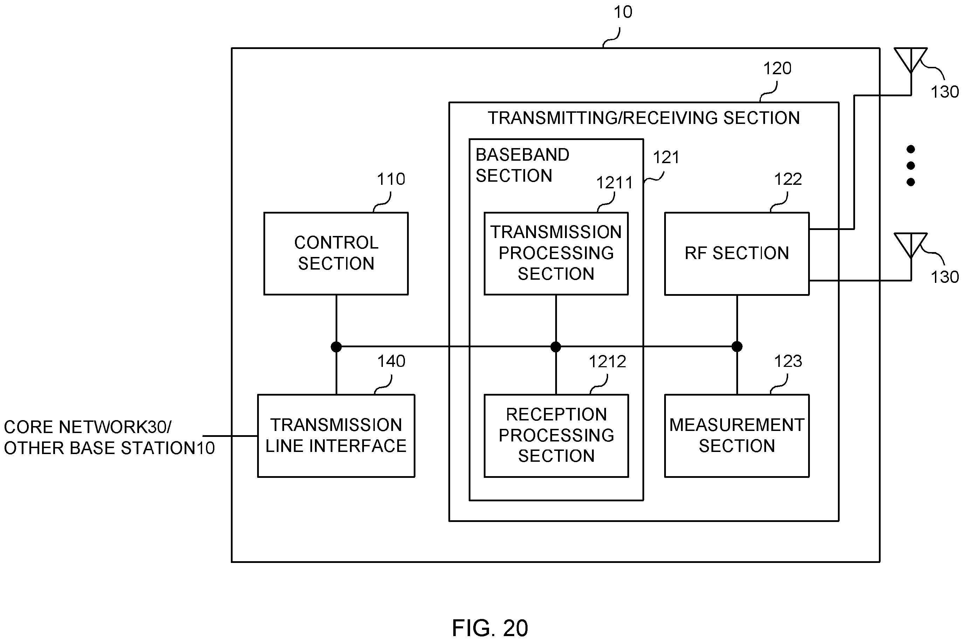

FIG. 20 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit downlink control information including information related to a resource for which an UL transmission is canceled.

When a plurality of UL transmissions that overlap in a time domain are scheduled or configured and at least one of the plurality of UL transmissions uses a resource for which an UL transmission is canceled, the control section 110 may determine that one of first UL transmission control and second UL transmission control is applied first and then the other is applied, and may control reception of an UL transmission, the first UL transmission control being based on a priority of each UL transmission, the second UL transmission control being based on information related to the resource for which the UL transmission is canceled.

When an HARQ-ACK for a semi-persistently transmitted downlink shared channel and another UL transmission overlap in a time domain and the another UL transmission uses a resource for which an UL transmission is canceled, the control section 110 may determine that one of first UL transmission control and second UL transmission control is applied first and then the other is applied, and may control reception of an UL transmission, the first UL transmission control being based on priorities corresponding to the HARQ-ACK and the another UL transmission, respectively, the second UL transmission control being based on information related to the resource for which the UL transmission is canceled.

### (User Terminal)

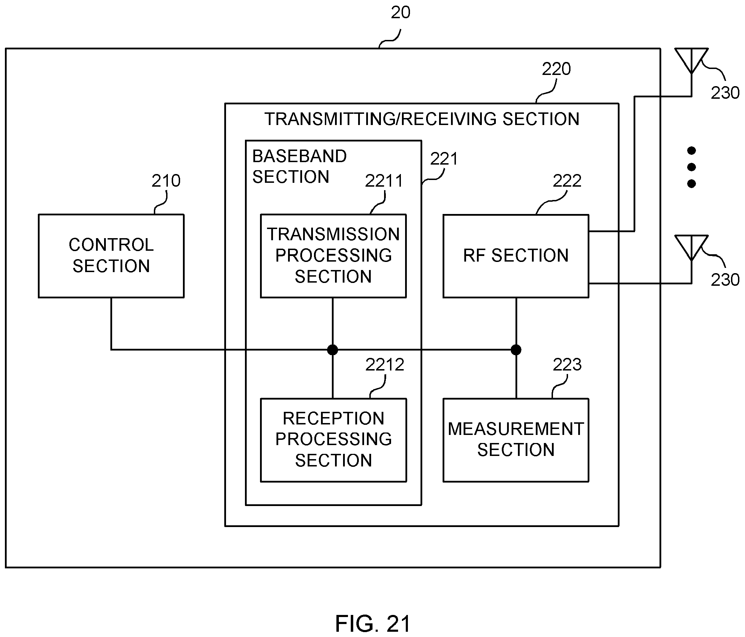

FIG. 21 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink control information including information related to a resource for which an UL transmission is canceled.

When a plurality of UL transmissions that overlap in a time domain are scheduled or configured and at least one of the plurality of UL transmissions uses a resource for which an UL transmission is canceled, the control section 210 may perform control to first apply one of first UL transmission control and second UL transmission control and then apply the other, the first UL transmission control being based on a priority of each UL transmission, the second UL transmission control being based on information related to the resource for which the UL transmission is canceled.

When an HARQ-ACK for a semi-persistently transmitted downlink shared channel and another UL transmission overlap in a time domain and the another UL transmission uses a resource for which the UL transmission is canceled, the control section 210 may perform control to first apply one of first UL transmission control and second UL transmission control and then apply the other, the first UL transmission control being based on priorities corresponding to the HARQ-ACK and the another UL transmission, respectively, the second UL transmission control being based on information related to the resource for which the UL transmission is canceled.

The control section 210 may perform control to first apply the first UL transmission control. Alternatively, the control section 210 may determine which of the first UL transmission control and the second UL transmission control is to be applied first based on reception timing of the downlink control information and reception timing of downlink control information corresponding to at least one of the plurality of UL transmissions.

The plurality of UL transmissions may include a transmission that uses an uplink control channel and an UL transmission that uses an uplink shared channel.

Other UL transmission may be of at least one of an uplink shared channel scheduled by downlink control information, a downlink shared channel configured by higher layer signaling, and a sounding reference signal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (two or more physically or logically separate apparatus), for example, via wire, wireless, or the like, and using these plurality of pieces of apparatus (these plurality of apparatus). The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

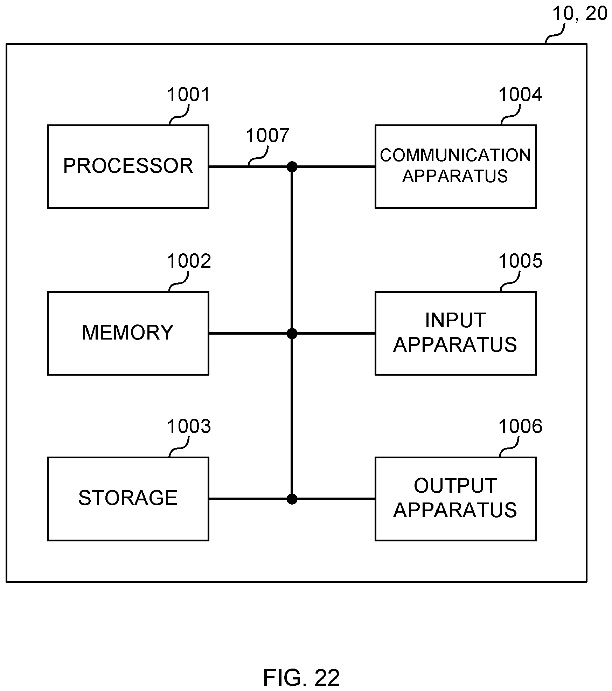

For example, a base station, a user terminal, and so on according to one embodiment of the present disclosure may function as a computer that executes the processes of the radio communication method of the present disclosure. FIG. 22 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus (between apparatus).

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware (at least one of these hardware).

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs .

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives downlink control information including information related to a resource for which an UL transmission is canceled; and
a control section that performs control to first apply one of first UL transmission control and second UL transmission control and then apply the other when an HARQ-ACK for a semi-persistently transmitted downlink shared channel overlaps with another UL transmission in a time domain and the another UL transmission uses the resource for which the UL transmission is canceled, the first UL transmission control being based on priorities corresponding to the HARQ-ACK and the another UL transmission, respectively, the second UL transmission control being based on information related to the resource for which the UL transmission is canceled.

2. The terminal according to claim 1, wherein
the control section performs control to first apply the first UL transmission control.

3. The terminal according to claim 1, wherein
the control section determines which of the first UL transmission control and the second UL transmission control is to be applied first based on reception timing of the downlink control information and reception timing of downlink control information that schedules the another UL transmission.

4. The terminal according to any one of claims 1 to 3, wherein
the another UL transmission is of at least one of an uplink shared channel scheduled by downlink control information, a downlink shared channel configured by higher layer signaling, and a sounding reference signal.

5. A radio communication method comprising:
receiving downlink control information including information related to a resource for which an UL transmission is canceled; and
performing control to first apply one of first UL transmission control and second UL transmission control and then apply the other when an HARQ-ACK for a semi-persistently transmitted downlink shared channel overlaps with another UL transmission in a time domain and the another UL transmission uses the resource for which the UL transmission is canceled, the first UL transmission control being based on priorities corresponding to the HARQ-ACK and the another UL transmission, respectively, the second UL transmission control being based on information related to the resource for which the UL transmission is canceled.

6. A base station comprising:
a transmitting section that transmits downlink control information including information related to a resource for which an UL transmission is canceled; and
a control section that controls reception of an UL transmission to which one of first UL transmission control and second UL transmission control is applied first and then the other is applied when an HARQ-ACK for a semi-persistently transmitted downlink shared channel overlaps with another UL transmission in a time domain and the another UL transmission uses the resource for which the UL transmission is canceled, the first UL transmission control being based on priorities corresponding to the HARQ-ACK and the another UL transmission, respectively, the second UL transmission control being based on information related to the resource for which the UL transmission is canceled.
